# EUROPEAN PATENT APPLICATION

(11) **EP 4 074 166 A1**
(43) Date of publication of application: **19.10.2022**
(21) Application number: 22168233.9
(22) Date of filing: 13.04.2022
(51) Int. Cl.: A01G 7/04, A01G 9/24, H05B 47/00, G06Q 50/02

(54) **METHODS AND SYSTEMS FOR CONTROLLING HORTICULTURAL LIGHT SOURCES**

(30) Priority: 13.04.2021 US 202163174101 P; 07.05.2021 US 202163185529 P
(71) Applicant: Sollum Technologies Inc., Montreal, QC H2Y 2R6 (CA)
(72) Inventor: MENARD, Patrick, MONTREAL (QUEBEC), H2Y 2R6 (CA); TREMBLAY, Kassim, MONTREAL (QUEBEC), H2Y 2R6 (CA); BRUN, Louis, MONTREAL (QUEBEC), H2Y 2R6 (CA); TREMBLAY, Marc, MONTREAL (QUEBEC), H2Y 2R6 (CA)
(74) Representative: EP&C

(57) **Abstract**

There are provided methods and systems for controlling light sources within a horticultural structure. The method includes: illuminating the plant or crop in a first zone with a first light source to meet initial lighting conditions of the plant or crop, the first light source being driven according to a first portion of a lighting scenario; monitoring information representative of illumination delivered to the plant or crop during the first portion of the scenario; receiving inputs indicating that the plant or crop is to be moved towards a second zone and determining subsequent lighting conditions of the plant or crop in the second zone, based on the monitored information; and illuminating the plant or crop in the second zone with a second light source to meet the subsequent lighting conditions of the plant or crop, the second light source being driven according to a second portion of the scenario.

## Description

### TECHNICAL FIELD

The technical field generally relates to lighting, and more particularly concerns methods and systems for controlling horticultural light sources within a horticultural structure.

### BACKGROUND

Artificial light sources may be used in horticulture or agriculture to assist or promote the growth of plants or crops. However, it remains a challenge to adequately determine the lighting requirements of a growing plant or crop, as the lighting requirements of the plants or crops may evolve during their growing process. Therefore, it remains challenging to adequately control horticultural lighting sources irradiating the plants or crops within a horticultural structure.

There remains a need for a method or system that can provide improvements in methods and systems for controlling horticultural light sources.

### SUMMARY

The present techniques generally concern methods and systems for controlling horticultural light sources illuminating a plant or crop within a horticultural structure, and more specifically relate to illuminating a plant or crop according to a first portion of a lighting scenario in a first zone of the horticultural structure and, after a displacement of the plant or crop from the first zone towards a second zone of the horticultural structure, illuminating the plant or crop according to a second portion of the lighting scenario in the second zone of the horticultural structure.

In accordance with one aspect, there is provided a method for controlling horticultural light sources within a horticultural structure, the method including:
determining initial lighting conditions of a plant or crop in a first zone of the horticultural structure;
in the first zone of the horticultural structure, illuminating the plant or crop with a first horticultural light source to meet the initial lighting conditions of the plant or crop, the first horticultural light source being driven according to a first portion of a lighting scenario;
monitoring information representative of horticultural illumination delivered to the plant or crop during the first portion of the lighting scenario;
receiving inputs indicating that the plant or crop is to be moved from the first zone towards a second zone of the horticultural structure and, in response thereto, determining subsequent lighting conditions of the plant or crop in the second zone of the horticultural structure, based on the monitored information; and
in the second zone of the horticultural structure, illuminating the plant or crop with a second horticultural light source to meet the subsequent lighting conditions of the plant or crop, the second horticultural light source being driven according to a second portion of the lighting scenario.

In some embodiments, the method further includes automatically displacing the plant or crop from the first zone towards the second zone.

In some embodiments, the method further includes tracking a position of the plant or crop.

In some embodiments, the method further includes monitoring the lighting scenario according to which the first horticultural light source and the second horticultural light source are driven.

In some embodiments, said monitoring the lighting scenario includes obtaining information about past, actual and/or forecasted lighting scenario.

In some embodiments, the method further includes editing the lighting scenario based on said monitoring the lighting scenario.

In some embodiments, the method further includes:
determining, within the first zone of the horticultural structure, at least one corresponding horticultural light source operable to meet the initial lighting requirements of the plant or crop in the first zone; and
determining, within the second zone of the horticultural structure, at least one corresponding horticultural light source operable to meet the initial lighting requirements of the plant or crop in the second zone.

In some embodiments, the method further includes defining horticultural zones within the horticultural structure.

In some embodiments, the method further includes defining at least one transient zone between the first zone and the second zone, wherein said at least one transient zone is associated with transient lighting conditions, the transient lighting conditions being related to a plant or crop need differing from an expected growth process of the plant or crop.

In some embodiments, said at least one transient zone is formed as a subzone of an existing zone.

In some embodiments, the lighting scenario is provided as a dataset including a plurality of sets of control parameters for the first horticultural light source and the second horticultural light source, each set of control parameters being associated to a respective illumination state of the first horticultural light source and the second horticultural light source.

In accordance with another aspect, there is provided a system for controlling horticultural light sources within a horticultural structure. The system includes at least one controller in data communication with a first horticultural light source and a second horticultural light source. The at least one controller is configured to:
upon determination of initial lighting conditions of a plant or crop in a first zone of the horticultural structure, send first illumination instructions to the first horticultural light source, such that the first horticultural light source is driven according to a first portion of a lighting scenario to meet the initial lighting conditions of the plant or crop;
monitor information representative of horticultural illumination delivered to the plant or crop during the first portion of the lighting scenario;
receive inputs indicating that the plant or crop is to be moved from the first zone towards a second zone of the horticultural structure; and
upon determination of subsequent lighting conditions of the plant or crop in the second zone of the horticultural structure, said determination being based on the monitored information, send second illumination instructions to the second horticultural light source, such that the second horticultural light source is driven according to a second portion of the lighting scenario to meet the subsequent lighting conditions of the plant or crop; and

The user interface is in data communication with the at least one controller and is configured to provide the inputs, the first illumination instructions and the second illumination instructions.

In some embodiments, the system further includes a tracking module operatively connected to the user interface, the tracking module being configured to track a position of the plant or crop.

In some embodiments, the system further includes a scenario monitoring module operatively connected to the user interface, the scenario monitoring module being configured for monitoring the lighting scenario according to which the first horticultural light source and the second horticultural light source are driven.

In some embodiments, said monitoring the lighting scenario includes obtaining information about past, actual and/or forecasted lighting scenario.

In some embodiments, the system further includes editing the lighting scenario based on said monitoring the lighting scenario.

In some embodiments, the system further includes a memory adapted to store at least one of: past illumination conditions of the plant or crop and calibration data.

In some embodiments, the controller is connected to a database, the database being adapted to store at least one of: past illumination conditions of the plant or crop and calibration data

In some embodiments, the lighting scenario is provided as a dataset including a plurality of sets or control parameters for the first horticultural light source and the second horticultural light source, each set of control parameters being associated to a respective illumination state of the first horticultural light source and the second horticultural light source.

In some embodiments, the controller is further configured to define at least one transient zone between the first zone and the second zone, wherein said at least one transient zone is associated with transient lighting conditions, the transient lighting conditions being related to a plant or crop need differing from an expected growth process of the plant or crop.

In accordance with another aspect, there is provided a non-transitory computer readable storage medium having stored thereon computer executable instructions that, when executed by a processor, cause the processor to perform the methods herein disclosed, or at least one step of the methods.

Other features and advantages of the method and system described herein will be better understood upon a reading of preferred embodiments thereof with reference to the appended drawings. Although specific features described in the above summary and in the detailed description below may be described with respect to specific embodiments or aspects, it should be noted that these specific features can be combined with one another unless stated otherwise.

### BRIEF DESCRIPTION OF THE DRAWINGS

Figure 1 shows an embodiment of a system for controlling horticultural light sources within a horticultural structure.
Figure 2 shows an embodiment of a system for controlling horticultural light sources within a horticultural structure.
Figure 3 is a flowchart illustrating a method for controlling horticultural light sources within a horticultural structure

### DETAILED DESCRIPTION

In the present description, similar features in the drawings have been given similar reference numerals. To avoid cluttering certain figures, some elements may not have been indicated if they were already identified in a preceding figure. It should also be understood that the elements of the drawings are not necessarily depicted to scale, since emphasis is placed on clearly illustrating the elements and structures of the present embodiments. Furthermore, positional descriptors indicating the location and/or orientation of one element with respect to another element are used herein for ease and clarity of description. Unless otherwise indicated, these positional descriptors should be taken in the context of the figures and should not be considered limiting. More particularly, it will be understood that such spatially relative terms are intended to encompass different orientations in the use or operation of the present embodiments, in addition to the orientations exemplified in the figures.

The terms "a", "an" and "one" are defined herein to mean "at least one", that is, these terms do not exclude a plural number of items, unless stated otherwise.

Terms such as "substantially", "generally" and "about", that modify a value, condition or characteristic of a feature of an exemplary embodiment, should be understood to mean that the value, condition or characteristic is defined within tolerances that are acceptable for the proper operation of this exemplary embodiment for its intended application.

Unless stated otherwise, the terms "connected" and "coupled", and derivatives and variants thereof, refer herein to any structural or functional connection or coupling, either direct or indirect, between two or more elements. For example, the connection or coupling between the elements may be acoustical, mechanical, optical, electrical, thermal, logical, or any combinations thereof.

The terms "match", "matching" and "matched" are intended to refer herein to a condition in which two elements are either the same or within some predetermined tolerance of each other. That is, these terms are meant to encompass not only "exactly" or "identically" matching the two elements but also "substantially", "approximately" or "subjectively" matching the two elements, as well as providing a higher or best match among a plurality of matching possibilities.

In the present description, the expression "based on" is intended to mean "based at least partly on", that is, this expression can mean "based solely on" or "based partially on", and so should not be interpreted in a limited manner. More particularly, the expression "based on" could also be understood as meaning "depending on", "representative of", "indicative of", "associated with" or similar expressions.

It should be noted that, in the context of the current disclosure, the expression "plants or crops" may encompass a broad variety of multicellular organisms, including photosynthetic eukaryotes. Non limitative examples of plants or crops are seedlings, ornamental crops, ornamental plants, plugs, liners, fruits, small fruits, vegetables, leafy greens, herbs, young plants, high-value crops, and many others. The plants or crops may be produced for human food, non-human food or non-food applications. The growing process of the plants or crops generally includes a plurality of subsequent plant growth stages, such as, for example, seed germination (or "sprout"), seedling, vegetative, bud stage (or "budding"), flowering and ripening. It should be understood that, in the present description, the plants or crops can be at any one of the plant growth stages or at a transition between any two subsequent growth stages.

The expression "horticultural light", synonyms and derivatives thereof will be used throughout the present disclosure, and refers to the use of optical techniques, systems, and methods for assisting, maintaining, stimulating and/or optimizing plants or crops growth. The horticultural light may irradiate or illuminate the plants or crops during any one of the plant growth stages. The horticultural light, which is the light generated by the horticultural lighting apparatus, may be produced or generated using an artificial light source or similar devices, apparatuses, and systems. Non-limiting examples of artificial light sources include incandescent light sources, fluorescent light sources, high-intensity discharge (HID) light sources such as mercury vapor, metal halide (MH), highpressure sodium (HPS) and low-pressure sodium (LPS) light sources, solid-state light sources including LED light sources, and laser sources. The horticultural light is associated with an illumination spectrum or profile. In some implementations, the horticultural light produced by the horticultural lighting apparatus have a profile substantially similar to light reaching the crop or plant. The expression "illumination spectrum" is used to broadly refer to the spectral power distribution of an illumination. The illumination spectrum can represent the distribution of power radiated per unit area and per unit wavelength or frequency over a spectral region of the electromagnetic spectrum. It should be noted that using horticultural light may be used to irradiate or illuminate plants or crops growing in a horticultural structure providing regulated climatic conditions to the plants or crops. Nonlimitative examples of horticultural structures include greenhouse, glasshouse and hothouse.

In the present description, the terms "light" and "optical", and variants and derivatives thereof, are used to refer to radiation in any appropriate region of the electromagnetic spectrum. The terms "light" and "optical" are therefore not limited to visible light, but can also include, without being limited to, the infrared and ultraviolet regions. For example, in some implementations, the present techniques can be used with electromagnetic signals having wavelengths ranging from about 250 nm to about 2500 nm. However, this range is provided for illustrative purposes only and some implementations of the present techniques may operate outside this range. Also, the skilled person will appreciate that the definition of the ultraviolet, visible and infrared ranges in terms of spectral ranges, as well as the dividing lines between them, can vary depending on the technical field or the definitions under consideration, and are not meant to limit the scope of applications of the present techniques.

The expressions "natural light" or "natural light conditions" generally refer to light having spectral characteristics corresponding or similar to those of sunlight, moonlight or starlight. The spectral profile of natural light, particularly sunlight, varies as a function of geographic location, time of day, time of year, weather, cloud coverage, and several other factors. Several standards are known in the art to provide a spectral reference for natural light. For example, the Commission internationale de I'eclairage (CIE) has established the D series of well-defined daylight standard illuminants representing natural light under different conditions. One well-known standard is CIE Standard Illuminant D65, which is a daylight illuminant that intends to represent the average midday light in Western or Northern Europe. Other examples of CIE Standard Illuminants for daylight include the D50, D55, and D75 standard illuminants. Sunlight, which refers to the total spectrum of electromagnetic radiation emitted by the Sun and reaching the Earth, has a broad spectral range including ultraviolet radiation, visible light, and infrared radiation. Accordingly, standard illuminants extend within the solar radiation spectrum. For example, Standard Illuminant D65 extends from 300 nm to 830 nm. Non-limiting examples of natural light sources include sunlight, moonlight, starlight, twilight, lightning, and firelight.

In the present description, the term "solid-state light emitter" refers to any light-emitting device that converts electrical energy into electromagnetic radiation through the recombination of electronic carriers *(i.e.,* electrons and holes) in a light emitting layer or region. The emitting layer or region can include, but is not limited to, silicon, silicon carbide, gallium nitride and/or other semiconductor materials, and may or may not include a substrate such as sapphire, silicon, silicon carbide and/or other microelectronic substrates. The solid-state light emitters can include both inorganic and organic light emitters, many of which are known to the skilled person and need not be described in detail herein. Non-limiting examples of types of solid-state light emitters include semiconductor light-emitting diodes (LEDs), semiconductor laser diodes, vertical cavity surface emitting lasers (VCSELs), other semiconductor light emitting devices or lamps, organic light-emitting diodes (OLEDs), and polymer light-emitting diode (PLEDs).

The expression "lighting scenario" is understood to refer to the generation of light, such as for illuminating purposes, according to predetermined optical characteristics (e.g., spectral content, intensity, polarization) that vary or evolve over time during a given time period. The optical characteristics of the generated light may correspond to or emulate those of natural lighting conditions. The natural light may emulate or be inspired from the actual light conditions experienced at a specific geographical location, date and time. It is appreciated that devising lighting scenarios that combine natural light conditions corresponding to different geographical locations is possible in some applications (e.g., a scenario could be build using sunrise, midday and sunset conditions corresponding to three distinct locations on Earth, at the same or different dates). In other embodiments, however, the natural light conditions may be different from real life conditions on Earth. By way of example, the spectrum of natural light generated according to the method described herein may differ from an actual spectral content of sunlight due to the absence of spectral components which are undesired or unnecessary in a given application context, or conversely by the enhancement or addition of wavelengths then are considered advantageous or required. The present techniques may rely on the use of solid-state light emitters. The solid-state light emitters can be driven to produce the lighting scenario using sets of control parameters. It should be noted that a plurality of lighting scenarios may be combined to collectively determine a "recipe" or a "recipe bundle". The recipe or the recipe bundle refers to a sequence of lighting scenarios.

In some embodiments, the lighting scenario may emulate lighting conditions over the course of a day, from dawn to dusk, or over a portion of a day. Indeed, the spectral contents of light reaching a particular location on earth from the Sun is not constant as the day progress. In some instances, it can be customary to characterize natural light according to its Correlated Color Temperature (CCT) value, expressed in Kelvin (K). By convention, the CCT is defined by the CIE as "the temperature of the Planckian radiatorwhose perceived color most closely resembles that of a given stimulus at the same brightness and under specified viewing conditions" (CIE/IEC 17.4:1987, International Lighting Vocabulary). Lower CCT values correspond to "warmer" light. Hence, a day with a clear blue sky can begin at dawn with light in a warm CCT spectrum range, such as between 1500K and 3000K, then progress to about 5000K to 7500K at mid-day and return to the 1500K to 3000K range towards dusk. In horticultural or agricultural applications, the light conditions in a region of the world from which a cultivated produce originates or where this produce is known to thrive can be emulated (e.g., growing tomatoes using light conditions from a sunny day in June in Tuscany). In other examples, the lighting conditions may be adapted in view of observations or discoveries regarding optimal or enhanced lighting conditions for growing a given agricultural output, such as for example to follow the McCree Curve, which represents the average photosynthetic response of plants to light energy.

The present description generally relates to methods and systems for controlling horticultural light sources within a horticultural structure. Broadly described, the present techniques allow illuminating a plant or crop according to a first portion of a lighting scenario in a first zone of the horticultural structure and, after a displacement of the plant or crop from the first zone towards a second zone of the horticultural structure, illuminating the plant or crop according to a second portion of the lighting scenario in the second zone of the horticultural structure. The lighting scenario can follow the plants or crops throughout their entire growth process, even if the plants or crops are moved or displaced within the horticultural structure.

### System for controlling horticultural light sources

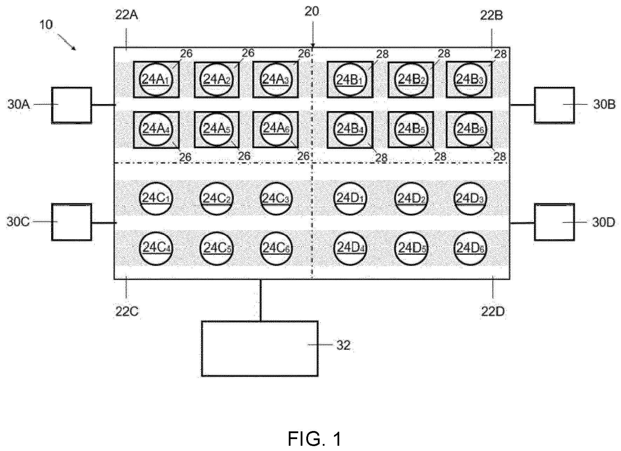

With reference to Figure 1, there is shown an embodiment of a system 10 for controlling horticultural light sources within a horticultural structure 20. The system 10 includes at least one controller and a user interface, as it will be explained in greater detail below. The system 10 (or components thereof) may be in data communication with the horticultural structure 20 (or components thereof). It should be noted that the expression "data communication" may refer to any types of direct connection and/or indirect connection. For example, the system 10 (or components thereof) may be connected to the horticultural structure (or components thereof) through direct communication such as a wired connection or via a network allowing data communication between devices or components of a network capable of receiving and/or sending data, which may include, to name a few, publicly accessible networks of linked networks, possibly operated by various distinct parties, such as the Internet, private networks (PN), personal area networks (PAN), local area networks (LAN), wide area networks (WAN), cable networks, satellite networks, cellular telephone networks and the like, or any combinations thereof.

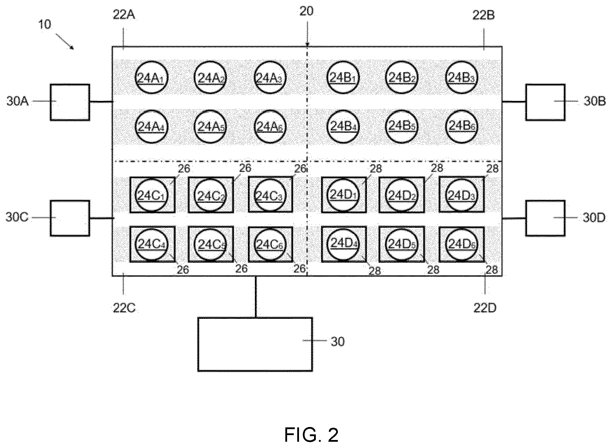

The embodiment of the horticultural structure 20 illustrated in Figures 1 and 2 includes four zones (sometimes referred to as "horticultural zones"), respectively labeled 22A-D and globally referred to as the zones 22. Each zone 22A-D may include one or more rows of plants or crops. For example, in the embodiment illustrated in Figure 1, each zone 22A-D includes two rows of plants or crops. The rows of plants or crops typically each include a plurality of plants or crops.

Of note, each zone 22 may be designed or configured to accommodate the plants or crops during one or more plant growth stages (or portions thereof). Alternatively, each zone 22 may be associated with a specific objective such as, for example and without being limitative, plant treatment, such as illuminating the plants or crops with horticultural light having a spectral profile including a waveband extending from about 640 to about 660 nm, to promote, enhance or assist the chlorophyll absorption and flowering, the Emerson enhancement effect, using the red and far-red light for increasing the rate of photosynthesis and UV-B or UV-C treatment for pest control.

The horticultural structure 20 includes at least one horticultural light source 24, and preferably a plurality of horticultural light sources 24. The embodiment of the system 10 illustrated in Figures 1 and 2 includes six horticultural light sources per zone 22A-D. More specifically, a first zone 22A of the horticultural structure 20 includes six horticultural light source, respectively labeled 24A₁₋₆, a second zone 22B of the horticultural structure 20 includes six horticultural light source, respectively labeled 24B₁₋₆, a third zone 22C of the horticultural structure 20 includes six horticultural light source, respectively labeled 24C₁₋₆ and a fourth zone 22D of the horticultural structure 20 includes six horticultural light source, respectively labeled 24D₁₋₆. The horticultural light source 24A₁₋₆, 24B₁₋₆, 24C₁₋₆, and 24D₁₋₆ (globally referred to as the horticultural light source 24) may be disposed in an array including two rows and three columns in a corresponding zone 22A-D, as shown in Figure 1. It should however be noted that the horticultural structure 20 may include any number of zones 22 and/or any number of plants or crops, and that the system 10 may include any number of horticultural light source 24. As it would have already been understood, Figures 1 and 2 serve an illustrative purpose only and should therefore not be considered limitative. Of note, the configuration of the plants or crops and their arrangement, as well as the position and arrangement of the horticultural light sources 24 may also vary or be adjusted depending on the application and the targeted growth objectives.

Each horticultural light source 24A₁₋₆, 24B₁₋₆, 24A₁₋₆, and 24D₁₋₆ may irradiate one or more plants or crops, or portions thereof. In Figure 1, each horticultural light source 24A₁₋₆ of the first zone 22A irradiates a corresponding plant or crop 26 and each horticultural light source 24B₁₋₆ of the second zone 22B irradiates a corresponding plant or crop 28. Still referring to Figure 1, no plants or crops are provided in the third zone 22C and the fourth zone 22D of the horticultural structure 20. The horticultural light source 24C₁₋₆ and 24D₁₋₆ are therefore not used to illuminate or irradiate a plant or crop. The configuration of the horticultural light source(s) 24 in each zone 22 may be based on the growth stage(s) of the plants or crops or the specific objective in the corresponding zone 22.

In some embodiments, the horticultural light sources 24 may be embodied by a lamp similar to the lighting system described in WO 2016119063, the content of which is incorporated herein by reference.

Plants or crops growing in horticultural structures are generally moved or displaced at least one time within the horticultural structure during their growing process. In the context of the current disclosure, it should be noted that the plants or crops are moved within the horticultural structure 20 such that the plants or crops are transferred from one of the zones 22A-D towards another of the zones 22A-D. For example, and without being limitative, the first zone 22A and the second zone 22B illustrated in Figure 1 may be designed and operated to irradiate plants or crops being in a seeding stage, *i.e.,* when the plants 26, 28 are in a seeding stage. Once the seeding growth stage is completed or close to the completion of the seeding growth stage, the plants 26, 28 may be transferred towards other zones 22 of the horticultural structure 20, which is illustrated in Figure 2, wherein the plants 26 have been transferred in the third zone 22C and the plants 28 have been transferred in the fourth zone 22D. For example, and without being limitative, the third zone 22C and the fourth zone 22D illustrated in Figure 2 may be designed and operated to irradiate plants or crops being in a flowering stage, *i.e.,* when the plants 26, 28 are in a flowering stage. The transfer of the plants 26, 28 may be a planned event. The planification of such a planned event may be based on growth parameters of the plants 26,28, other properties of the plants 26, 28, calibration data, weather or ambient conditions in the horticultural structure 20 (past, present and/or forecasted weather or ambient conditions), integral indicators, various planned activities that normally take place in the horticultural structure 20 (e.g., maintenance of the horticultural structure 20 and/or horticultural light sources 24, reorganization or redefinition of the zones 22, arrival of new of plants or crops in the horticultural structure 20, shipping of grown plants or crops outside the horticultural structure 20, and many others), and the like. The transfer of the plants 26,28 may alternatively be an unexpected event, which may be caused, for example, by plants or crops diseases, incident in the horticultural structure (e.g., water damage, fire damage, wind damage and many others), abnormal or suboptimal growth of the plants 26,28, unexpected changes in weather or ambient conditions (past, present and/or forecasted weather or ambient conditions) in the horticultural structure 20, and the like.

It should be noted that the illumination conditions of the plants or crops 26,28 in the subsequent zones (e.g., zones 22C and 22D) should substantially match or at least minimally follow the illumination conditions of the plants or crops 26,28 in the initial zone (e.g., zones 22A and 22B), at least at the beginning of their presence in the subsequent zones. More specifically, if the plants or crops 26,28 were irradiated with horticultural light sources 24A₁₋₆ and 24B₁₋₆ driven according to a first portion of a lighting scenario in initial zones 22A,B, the plants or crops 26,28, once moved in the subsequent zones 22C,D, should be irradiated with horticultural light sources 24C₁₋₆ and 24D₁₋₆ driven according to a second portion of the same lighting scenario that was used to drive the horticultural light sources 24A₁₋₆ and 24B₁₋₆. In so doing, the present techniques provide a way of providing appropriate illumination conditions to the plants or crops throughout their entire growing process or at least a significant portion (or subset) of the growing process independently of their position or location within the horticultural structure 20, even if the plants or crops are moved several times within the horticultural structure 20. In other words, the present techniques allow tracking the plants or crops in the horticultural structural 20 and monitoring information representative of horticultural illumination delivered to the plant or crop during one or more different portions of the lighting scenario. Knowing the position of the plants or crops and the horticultural illumination having been delivered to the plants or crops, the present techniques allow providing adequate horticultural illumination within the horticultural structure 20 during the entire growing process of the plants or crops, independently of the actual position of the plants or crops within the horticultural structure 20.

In some embodiments, the plants or crops 26,28 may be displaced or moved more than one time, *i.e.,* the plants or crops 26,28 may be sequentially displaced from an initial zone towards a plurality of subsequent zones, globally referred to as a route or path of the plants or crops 26,28 within the horticultural structure 20.

A nonlimitative example of the present techniques will be described with reference to Figures 1 and 2. As it has been previously mentioned, in Figure 1, each of the horticultural light source 24A₁₋₆ irradiates a corresponding plant or crop 26 and each of the horticultural light source 24B₁₋₆ irradiates a corresponding plant or crop 28. It may be determined that the growth stage of the plants or crops 26,28 and/or requirements of the plants or crops 26, 28 are such that it would be required or at least preferable to displace or move the plants or crops 26, 28 towards another zone of the horticultural structure 20. This determination may be automatic (e.g., using a vision system such as a camera, scheduled as a part of a growing plan), manual (e.g., through visual inspection) or any combinations thereof. Now turning to Figure 2, the plants or crops 26 have been moved from the first zone 22A towards the third zone 22C and the plants or crops 28 have been moved from the second zone 22B towards the fourth zone 22D. As illustrated in Figure 2, each of the horticultural light source 24C₁₋₆ irradiates a corresponding plant or crop 26 and each of the horticultural light source 24D₁₋₆ irradiates a corresponding plant or crop 28.

In some embodiments, the displacement of the plants or crops 26, 28 may be automatically performed, for example using conveyor, belts, robots and any other mechanical systems that can be used to move the plants or crops 26, 28 from one zone towards another. In some embodiments, the displacements may be semi-automatically or manually performed.

Now that the system 10 has been broadly presented, the components of the system 10 will be described in greater detail.

As it has been previously mentioned, and with reference to Figures 1 and 2, the system includes at least one controller 30 (herein referred to as the "controller", the "controllers" or the "controller(s)") in data communication with the horticultural light sources 24. The system also includes a user interface 32 in data communication with the controller(s) 30.

The controllers 30 are configured to perform a series of steps, such as, to name a few, send illumination instructions to the horticultural light sources 24, monitor information representative of the horticultural illumination delivered to the plants or crops 26,28 during portion(s) of a lighting scenario used to drive the horticultural light sources 24, receive inputs indicating that the plant or crop is to be moved from a first or initial zone (e.g., the first zone 22A) towards a second or subsequent zone (e.g., the third zone 22C) of the horticultural structure 20 and determine subsequent lighting conditions of the plants or crops 26,28 in the second zone of the horticultural structure 20, based on the monitored information.

The controllers 30 may be configured to send first illumination instructions to one of the horticultural light sources 24, such that the corresponding horticultural light source 24 is driven according to a first portion of a lighting scenario to meet the initial lighting conditions of the plant or crop. The first illumination instructions may be based on a determination of initial lighting conditions of the plants or crops in the first zone of the horticultural structure 20. The initial lighting conditions generally depend on the growth stage of the plants or crops but could depend on any other relevant factors. Similarly, the controllers 30 may be configured to send lighting second illumination instructions to another one of the horticultural light sources 24, such that the corresponding horticultural light source 24 is driven according to a second portion of the lighting scenario to meet the subsequent lighting conditions of the plant or crop. The second illumination instructions may be based on a determination of subsequent lighting conditions of the plants or crops in the second zone of the horticultural structure 20. The subsequent lighting conditions generally depend on the growth stage of the plants or crops but could depend on any other relevant factors.

In some embodiments, each horticultural light source 24 includes a dedicated controller (not illustrated in the Figures) and each dedicated controller is operatively connected to the user interface 32. The user interface 32 may be configured to select one of horticultural light source 24, receive information about the illumination sequence or the lighting scenario being provided by the selected horticultural light source 24 during portion(s) of a lighting scenario and/or send illumination instructions to the selected horticultural light source 24. As such, the user interface 32 may be in data communication with each dedicated controller of the horticultural light sources 24 through a corresponding communication channel. Of note, the dedicated controller of each horticultural light source 24 may communicate with the user interface 32 over a network. The term "network", synonyms and derivatives thereof are used to refer to any classes of network, which includes publicly accessible networks of linked networks, possibly operated by various distinct parties, such as the Internet, private networks, personal area networks, local area networks, wide area networks, cable networks, satellite networks, cellular telephone networks or any combinations thereof.

In some embodiments, the system 10 includes one or more controllers operatively connected to a plurality of horticultural light sources 24. For example, and as illustrated in Figures 1 and 2, the horticultural light sources 24A₁₋₆ may be associated with a common first zone controller 30A, the horticultural light sources 24B₁₋₆ may be associated with a common second zone controller 30B, the horticultural light sources 24C₁₋₆ may be associated with a common third zone controller 30C and the horticultural light sources 24D₁₋₆ may be associated with a common fourth zone controller 30D.

The user interface 32 may be configured to control the horticultural light sources 24 through their associated controller(s) 30 or zone controllers 30A-D, and so may be configured to select one of the first to fourth zone controllers 30A-D, receive information about the illumination sequence or the lighting scenario being provided to the plants or crops by the corresponding horticultural light sources 24 in the corresponding zone(s) 22A-D and/or send illumination instructions to the horticultural light sources 24 in each zone 22. As such, the user interface 32 may be in data communication with each zone controller through a corresponding communication channel. Of note, each zone controller 30A-D may communicate with the user interface 32 over a network, similarly to what has been previously described.

In some embodiments, the user interface 32 may be a graphical user interface. The user interface 32 is operatively connected to at least one of the horticultural lighting sources 24 through at least one controller 30 to allow a user to interact with the horticultural lighting sources 24. In some embodiments, the user interface 32 may be displayed on a display or a screen. In some embodiments, the graphical user interface 32 may be part of a web-based application that may be accessed and displayed using a computing device connected to the Internet or any types of network.

In some embodiments, the system 10 may include a plant or crop tracking module operatively connected to the user interface 32. Such a module may be used to track a position or location of the plants or crops within the horticultural structure 20. The tracking of the plants or crops may be continuous, in real time, near real time, periodic, automatic, manual, semi-automatic, and any combinations thereof. In some embodiments, the plant or crop tracking module may rely on existing geolocating techniques. In some embodiments, the plant or crop tracking module may rely on a production logistics system.

In some embodiments, the system 10 may include a scenario monitoring module operatively connected to the user interface 32. Such a module may be used for monitoring or tracking the lighting scenarios or recipes according to which the horticultural lighting sources 24 are driven. The scenario tracking module may provide information on the past, actual and/or forecasted lighting scenarios or light recipes. The scenario tracking module may further be configured to allow editing or adjusting the lighting scenario.

In some embodiments, the system 10 may include a memory, or may include or be connected to a database (e.g., through the controller) to store past lighting scenarios or illumination conditions of the plants or crops, calibration data, and/or other relevant data. In some embodiments, the lighting scenarios may be provided in a dataset including a plurality of sets of control parameters for the horticultural light sources 24. Each set of control parameters may be associated to an illumination state of the horticultural light source 24. The dataset may be stored as a relational database and may have a database format commonly used in the art, such as Domino, SQL, SCSV, Office 365, or the like. The dataset may comprise textual information, numeral information, time information, date information, image information, and any combinations thereof. In the context of controlling horticultural light, the control parameters may include the different driving parameters of the horticultural light.

The lighting requirements of the plants or crops may vary or evolve during the growing process or during one growth stage of the plants or crops. In some embodiments, the controllers 30 are configured to adjust or adapt the horticultural light provided to the plants or crops to compensate for the evolution of the lighting requirements of the plants or crops.

The system 10 having been described may be implemented in computer programs executed on programmable computers. A programmable computer generally includes at least a processor and a data storage system that may include volatile and non-volatile memory and/or storage elements. The programmable computer may be a programmable logic unit, a mainframe computer, server, and personal computer, cloud-based program or system, laptop, personal data assistance, cellular telephone, smartphone, wearable device, tablet device, virtual reality devices, smart display devices, set-top box, video game console, portable video game devices, or virtual reality device. In some embodiments, the systems and methods may be provided as a plug-in. In some embodiments, one or more components of the system 10 having been described may be provided as a plug-in. The expression "plug-in" herein refers to a software component adding a predetermined feature or functionality to the system 10. Providing the different modules as plug-ins may be associated with some benefits, such as, for example and without being limitative, adaptability, modularity and flexibility.

Of note, the computer programs may be implemented in a high-level procedural or object-oriented programming and/or scripting language to communicate with a computer system. The programs could alternatively be implemented in assembly or machine language, if desired. In these implementations, the language may be a compiled or interpreted language. The computer programs are generally stored on a storage media or a device readable by a general or special purpose programmable computer for configuring and operating the computer when the storage media or device is read by the computer to perform the procedures described herein. In some embodiments, the systems may be embedded within an operating system running on the programmable computer.

### Method for controlling horticultural light sources

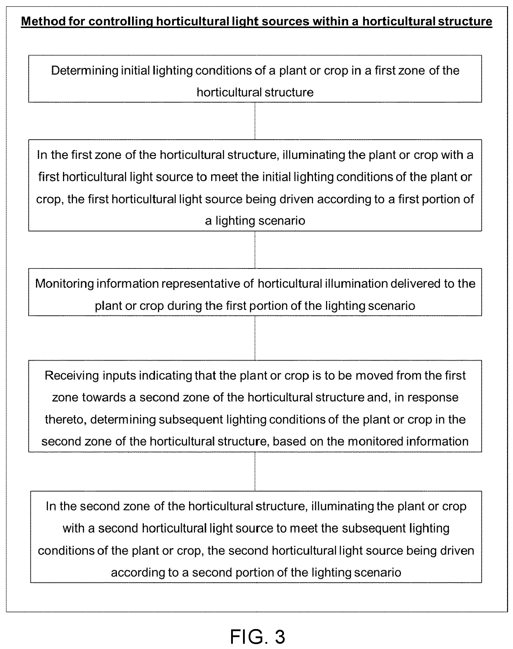

Now turning to Figure 3, there is illustrated a method for controlling horticultural light sources within a horticultural structure.

The method includes a step of determining initial lighting conditions of a plant or crop in a first zone of the horticultural structure.

After the determination of the initial lighting conditions of the plant or crop, the method includes a step of illuminating, in the first zone of the horticultural structure, the plant or crop with a first horticultural light source to meet the initial lighting conditions of the plant or crop. During this step, the first horticultural light source is driven according to a first portion of a lighting scenario.

The method also includes a step of monitoring information representative of horticultural illumination delivered to the plant or crop during the first portion of the lighting scenario.

The method also includes a step of receiving inputs indicating that the plant or crop is to be moved from the first zone towards a second zone of the horticultural structure. In response to these inputs, a step of determining subsequent lighting conditions of the plant or crop in the second zone of the horticultural structure is carried out. The determination of the subsequent lighting conditions is based on the monitored information representative of the horticultural illumination having been delivered to the plant or crop during the first portion of the lighting scenario.

The method also includes a step of illuminating the plant or crop, in the second zone of the horticultural structure, with a second horticultural light source to meet the subsequent lighting conditions of the plant or crop. During this step, the second horticultural light source being driven according to a second portion of the lighting scenario.

In some embodiments, the method may include determining or identifying, within the first zone of the horticultural structure, a horticultural light source operable to meet the initial lighting requirements of the plant or crop in the first zone. This step may be automatically, semi-automatically or manually performed through the user interface. Similarly, in some embodiments, the method may include determining or identifying, within the second zone of the horticultural structure, a horticultural lighting apparatus operable to meet the lighting requirements of the plant or crop. These steps may be followed by a step of driving the corresponding horticultural light source according to an appropriate lighting scenario or portion(s) of a lighting scenario.

In some embodiments, the method includes defining the horticultural zones within the horticultural structure. For example, the first to fourth zones described with reference to Figures 1 and 2 may be defined, *i.e.,* created and/or edited. In some embodiments, defining the horticultural zones may include creating the zones, delimiting their limits, adjusting their dimensions, and the like. These steps may be carried out through the user interface. For example, the user interface may be configured to display a representation of the horticultural structure and the horticultural light sources, interact with the representation of the horticultural structure (and components). The user interface may further be configured to create, delete, duplicate, replicate, edit and/or reorganize the horticultural zones, based on the plants or crops present in the horticultural structure and their needs.

In some embodiments, the method may further include a step of defining or forming transient zones within the horticultural structure. The transient zones may sometimes be referred to as temporary zones, ad hoc zones and/or ephemeral zones. In some embodiments, the transient zones may be temporarily created or formed between two successive horticultural zones, within the horticultural structure, or may alternatively formed in a least a portion *(i.e.,* a specific area) of one of the existing horticultural zones. For example, after the transfer of the plants or crops from a first zone towards a second zone of the horticultural structure, it may be determined that the transferred plants or crops need a special treatment or specific illumination conditions before pursuing the irradiation of the plants or crops with the second portion of the lighting scenario. Of note, the special treatment or specific illumination conditions are generally related to a particular purpose or need that differs from the expected, typical or normal growth/growing process of the plants or crops. After their passage in a transient zone, the plants or crops may be transferred in the subsequent zone wherein their growth/growing process may continue. In some embodiments, one of the existing horticultural zones may be temporarily transformed into a transient zone.

In some embodiments, the transient zones may be formed as a subset or a subzone of an existing zone, *i.e.,* a portion of one of the zones 22A-D illustrated in Figures 1 and 2 may be reconfigured as a transient zone. For example, and without being limitative, and with reference to Figure 1, a portion of the first horticultural zone 22A may be reconfigured as a transient zone. In one nonlimitative example, the horticultural light sources 24A₁ and 24A₄ may be assigned to a transient zone, while the horticultural light sources 24A₂₋₃ and 24A₅₋₆ may be driven according the lighting scenario being delivered to the plants or crops in the first zone 22A. As such, an existing horticultural zone 22A-D may be separated into two or more zones, at least one of these zones being a transient zone, the other zone(s) being operated as usual.

In some embodiments, the method may include tracking the plants or crops to obtain a position or location of the plants or crops within the horticultural structure. This step of tracking the plants or crops may be continuous, in real time, near real time, periodic, automatic, manual, semi-automatic, and any combinations thereof.

In some embodiments, the method may include monitoring or tracking the lighting scenarios or recipes according to which the horticultural lighting sources are driven. This step may provide information on the past, actual and/or forecasted lighting scenarios. In some embodiments, the method may include editing or adjusting the lighting scenario.

The lighting requirements of the plants or crops may vary or evolve during the growing process or during one growth stage of the plants or crops. In some embodiments, the method may include adjusting or adapting the horticultural light provided to the plants or crops to compensate for the evolution of the lighting requirements of the plants or crops.

In accordance with another aspect of the present description, there is provided a non-transitory computer readable storage medium having stored thereon computer executable instructions that, when executed by a processor, cause the processor to perform the methods that have been previously described. The non-transitory computer storage medium can be integrated to the systems or assemblies that have been described in the present description. The non-transitory computer storage medium could otherwise be operatively connected with the systems or assemblies. In the present description, the terms "computer readable storage medium" and "computer readable memory" are intended to refer to a non-transitory and tangible computer product that can store and communicate executable instructions for the implementation of various steps of the method disclosed herein. The computer readable memory can be any computer data storage device or assembly of such devices, including random-access memory (RAM), dynamic RAM, read-only memory (ROM), magnetic storage devices such as hard disk drives, solid state drives, floppy disks and magnetic tape, optical storage devices such as compact discs (CDs or CDROMs), digital video discs (DVD) and Blu-Ray^{™} discs; flash drive memory, and/or other non-transitory memory technologies. A plurality of such storage devices may be provided, as can be understood by those skilled in the art. The computer readable memory may be associated with, coupled to, or included in a computer or processor configured to execute instructions contained in a computer program stored in the computer readable memory and relating to various functions associated with the computer.

### Examples

Now that different embodiments of the technology have been described, some nonlimitative examples illustrating potential implementations of the techniques will be presented. It should be noted that these examples serve an illustrative purpose only and should therefore not be considered limitative.

According to a first example, there will be described a farm production system capable of fulfilling customer orders for specific quantities and varieties of ornamental flowers. Such a farm production system may be implemented ordesigned in the context of in an ornamental flower controlled growth environment. Of note, the orders may include any number of flower varieties and may be of different order sizes.

The farm production system (sometimes referred to as a "facility") may comprise a logistics system configured to coordinate a displacement of the plants and locating the same during the production lifecycle. In the context of the first example, the expression "production lifecycle" may include, for example, the reception of the order, growing the plants (*e*.*g*., seeding, germination and/or growth) and shipping.

The farm production system may include robots or similar apparatuses configured to receive instructions from the logistics system and, in response thereto, move the plants or crops to a specific location within the farm production system.

The farm production system may include many horticultural light sources configured to irradiate a corresponding plant or crop.

The logistics system may be configured to plan, control, and implement a production protocol (or similar methods) with the objective of optimizing parameters associated with the delivery of the plants or crops in according to the customers' orders. The logistics system may be configured to interact with the controller having been previously described to alter the configuration of the horticultural zones, if required.

In some scenarios, a physical reorganization of the plants or crops may be required under certain circumstances, for instance, when an unanticipated increase in upstream orders requires the acceleration of the growing process (*i.e.,* decreasing the production time for certain varieties), or when the cancelation of an order for which the production has already started, thereby suddenly or unexpectedly producing extra unanticipated capacity and/or plants or crops quantities.

When a physical reorganization of the plants or crops is required, the logistics system may be configured to instruct robots to physically move the plants or crops as needed, and then instruct the controller to reconfigure the horticultural zones and continue (*i.e.,* "resolving" or "resuming") the lighting scenarios associated to individual orders accordingly.

New design patterns are made possible from the creation of a layer of abstraction between the lighting scenario and the physical elements of the plant production system, and the plants or crops and the horticultural light source, resulting in increased logistic operational flexibility.

According to a second example, there will be described a farm undergoing major renovations in which the production line should not be interrupted or minimally altered by the major renovations. It should be noted that operating horticultural structure may require major renovations in order to, for example and without being limitative, modernize elements of the ceiling structure and/or perform the installation of light abatement screens. This type of work typically requires clearing the area under the section where maintenance is required.

When working on any given section of the horticultural structure (e.g., a greenhouse), plants should be moved to an alternate location. The alternate location is preferably a temporary location. This movement can occur at any moment during the growing cycle, which means that the lighting scenario associated with different plant maturities and varieties would need to be interrupted at various points of their respective timelines.

It is generally an objective to minimize the impact of the renovation activities on the growing process of the plants or crops. A nonlimitative example of an appropriate strategy to achieve this objective is to move the plants or crops from the work section to a contiguous area having surface similar to a surface of the section under work. Of note, the horticultural zones may be reconfigured to correspond to the section being renovated, and subsequently take advantage of the ability to transfer the lighting scenario from one zone to another, as it has been described above.

The abovementioned strategy would not be possible or feasible in traditional approaches relying on fixed spectrum lighting without having to physically relocate the light sources *(i.e.,* dismounting, displacing and remounting the light sources or lamps). Of note, the relocation of lamps could be performed without negatively impacting the plants or crops only if enough time is left outside the photoperiod to complete the relocation of the lamps. Additional project management and human resources would also have to be taken into consideration.

According to a third example, there will be described a pepper growing facility. The pepper growing facility of this example may include a production system wherein plants are physically moved across a production line using a conveyor system as they evolve through phases of their growth or growing process.

A standardized seedling-to-pickup lightning scenario may have been developed for the crop. The lighting scenario may encompass the various illumination phases needed by the crop during its lifecycle.

Various varieties of pepper may grow in a same facility. Of note, some greenhouse pepper varieties may have short internodes that result in peppers that are difficult to harvest because they are closely packed *(i.e.,* the peppers are relatively close one to another). These peppers may be irradiated with far-red light for a relatively short time after the setting of the fruits to lengthen the internodes or nodes of the peppers. Once the nodes have the desired length, the far-red light may be stopped.

The abovementioned far-red treatment may be performed in a transient zone as described above, *i.e.,* a temporary zone within the horticultural structure, and as part of the production line, *e.g.,* between the flowering zone and the fruit growth zone. Creating temporary transient zones for the duration of treatment is generally associated with a better control of the horticultural light, while ensuring the continuity of the ongoing lighting scenario and allowing for some exceptions to account for unexpected events or growth of the plants. The use of a transient zone may also allow flexibility for the operator to deal with exceptions in the lighting requirements of the plants or crops, while maintaining the standardized aspects of the production system.

Several alternative embodiments and examples have been described and illustrated herein. The embodiments described above are intended to be exemplary only. A person skilled in the art would appreciate the features of the individual embodiments, and the possible combinations and variations of the components. A person skilled in the art would further appreciate that any of the embodiments could be provided in any combination with the other embodiments disclosed herein. The present examples and embodiments, therefore, are to be considered in all respects as illustrative and not restrictive. Accordingly, while specific embodiments have been illustrated and described, numerous modifications come to mind without significantly departing from the present disclosure.

## Claims

1. A method for controlling horticultural light sources within a horticultural structure, the method comprising:
determining initial lighting conditions of a plant or crop in a first zone of the horticultural structure;
in the first zone of the horticultural structure, illuminating the plant or crop with a first horticultural light source to meet the initial lighting conditions of the plant or crop, the first horticultural light source being driven according to a first portion of a lighting scenario;
monitoring information representative of horticultural illumination delivered to the plant or crop during the first portion of the lighting scenario;
receiving inputs indicating that the plant or crop is to be moved from the first zone towards a second zone of the horticultural structure and, in response thereto, determining subsequent lighting conditions of the plant or crop in the second zone of the horticultural structure, based on the monitored information; and
in the second zone of the horticultural structure, illuminating the plant or crop with a second horticultural light source to meet the subsequent lighting conditions of the plant or crop, the second horticultural light source being driven according to a second portion of the lighting scenario.

2. The method of claim 1, further comprising automatically displacing the plant or crop from the first zone towards the second zone.

3. The method of claim 1 or 2, further comprising monitoring the lighting scenario according to which the first horticultural light source and the second horticultural light source are driven.

4. The method of claim 3, wherein said monitoring the lighting scenario comprises obtaining information about past, actual and/or forecasted lighting scenario.

5. The method of claim 3 or 4, further comprising editing the lighting scenario based on said monitoring the lighting scenario.

6. The method of any one of claims 1 to 5, further comprising defining horticultural zones within the horticultural structure.

7. The method of any one of claims 1 to 6, further comprising defining at least one transient zone between the first zone and the second zone, wherein said at least one transient zone is associated with transient lighting conditions, the transient lighting conditions being related to a plant or crop need differing from an expected growth process of the plant or crop.

8. The method of claim 7, wherein said at least one transient zone is formed as a subzone of an existing zone.

9. A system for controlling horticultural light sources within a horticultural structure, the system comprising:
at least one controller in data communication with a first horticultural light source and a second horticultural light source, said at least one controller being configured to:
upon determination of initial lighting conditions of a plant or crop in a first zone of the horticultural structure, send first illumination instructions to the first horticultural light source, such that the first horticultural light source is driven according to a first portion of a lighting scenario to meet the initial lighting conditions of the plant or crop;
monitor information representative of horticultural illumination delivered to the plant or crop during the first portion of the lighting scenario;
receive inputs indicating that the plant or crop is to be moved from the first zone towards a second zone of the horticultural structure; and
upon determination of subsequent lighting conditions of the plant or crop in the second zone of the horticultural structure, said determination being based on the monitored information, send second illumination instructions to the second horticultural light source, such that the second horticultural light source is driven according to a second portion of the lighting scenario to meet the subsequent lighting conditions of the plant or crop; and
a user interface in data communication with said at least one controller, the user interface being configured to provide the inputs, the first illumination instructions and the second illumination instructions.

10. The system of claim 9, further comprising a tracking module operatively connected to the user interface, the tracking module being configured to track a position of the plant or crop.

11. The system of claim 9 or 10, further comprising a scenario monitoring module operatively connected to the user interface, the scenario monitoring module being configured for monitoring the lighting scenario according to which the first horticultural light source and the second horticultural light source are driven.

12. The system of claim 11, further comprising editing the lighting scenario based on said monitoring the lighting scenario.

13. The system of any one of claims 9 to 12, further comprising a memory adapted to store at least one of: past illumination conditions of the plant or crop and calibration data.

14. The system of any one of claims 9 to 13, wherein the controller is connected to a database, the database being adapted to store at least one of: past illumination conditions of the plant or crop and calibration data

15. The system of any one of claims 9 to 14, wherein the controller is further configured to define at least one transient zone between the first zone and the second zone, wherein said at least one transient zone is associated with transient lighting conditions, the transient lighting conditions being related to a plant or crop need differing from an expected growth process of the plant or crop.
